# EUROPEAN PATENT SPECIFICATION

(11) **EP 1 486 755 B1**
(45) Date of publication and mention of the grant of the patent: **16.01.2008**
(21) Application number: 04253393.5
(22) Date of filing: 07.06.2004
(51) Int. Cl.: G01B 5/00, B08B 9/049, B05D 7/22, F16L 55/26

(54) **Conduit inspection apparatus and method**
Vorrichtung und Verfahren zur Inspektion von Rohrleitungen
Dispostif et procédé pour l'inspection de conduites

(30) Priority: 06.06.2003 GB 0312999
(43) Date of publication of application: 15.12.2004
(73) Proprietor: Breval Technical Services Limited, Hillington Park, Glasgow G52 4SS, Scotland (GB)
(72) Inventor: MacMillan, John Stewart, Glasgow G61 1DE (GB); McBride, Patrick Gerard, Dumbarton G82 5HY (GB); MacMillan, John Gibb, Dunbartonshire G82 (GB); Main, Colin, Hamilton ML3 7QT (GB); Kennedy, David, Blanefield G63 9DR (GB); Cameron, Kenneth, East Kilbride G75 8LX (GB)
(74) Representative: Kennedy, David Anthony

(56) References cited:
- EP-A- 0 795 360
- EP-A- 1 245 692
- DE-A1- 10 215 325
- DE-U1- 20 020 056
- US-A1- 2002 102 136

## Description

This invention relates to a conduit inspection apparatus and to a method of inspecting a conduit. In particular, but not exclusively, the present invention relates to conduit inspection apparatus of a type adapted to be located within and transported along a conduit such as a duct.

Conduit inspection apparatus comprising a body adapted to be transported along a conduit for cleaning, monitoring and other purposes are known, for example from German patent publication Nos. DE 19641887 (Siemens AG), DE 19823398 (Sauter) and DE 19620239 (Bauer et al), as well as US patent Nos. US 6,180,169 (Nichols) and US 5,113,885 (Ramsey).

The apparatus disclosed in these and other publications suffer from a number of disadvantages, including relative complexity, likelihood of damage or deterioration in performance of components of the apparatus in use, inability to be used within conduits of a wide range of types and internal dimensions, inability to perform a wide range of functions and a lack of data obtainable using the apparatus.

US Patent publication no. 2002/0102136A1 (Holland) discloses a robotic apparatus and method for treatment of a system of conduits and lateral sub-conduits. The apparatus includes a mule having a centralised main body and a purging nozzle, and is propelled by drive assemblies. A control vehicle is provided for delivering the mule and includes remote computer controls and reel storage for umbilicals for delivery and support of various systems. The purging assembly includes a nozzle which can be used to apply a coating to a conduit.

It is amongst the objects of embodiments of the present invention to obviate or mitigate at least one of the foregoing disadvantages. In particular, it is amongst the objects of embodiments of the present invention to provide an improved conduit inspection apparatus and method.

According to a first aspect of the present invention, there is provided conduit inspection apparatus comprising:
a body adapted for location within a conduit; a centralisation assembly for centralising the body within the conduit; a transportation assembly for transporting the body along the conduit; a data coupling for data communication between the body and a control station; and
a fluid applicator for supplying a fluid to a surface of the conduit;
characterised in that the fluid applicator comprises an atomiser which is moveable between a deactivated position and an activated position, in the activated position the atomiser serving for supplying the fluid to the surface of the conduit; and in that the apparatus further comprises a housing for storing the atomiser when in the deactivated position.

The apparatus may be used for inspection of conduits of various types and internal dimensions. The apparatus has a particular utility in the inspection of ducts such as those used for ventilation in buildings, however, the apparatus may also be used in alternative ducts, pipelines such as gas or fluid pipelines, drains, sewers and the like. It will be understood that the conduit may be of any shape in cross-section, and is typically square, rectangular or circular, but that the apparatus is suitable for use in conduits of any shape due in part to the dimensions of the apparatus and the ability of the centralisation assembly to centralise the body within the conduit.

It will also be understood that references herein to inspection and to inspection apparatus are to an apparatus suitable for location and movement along a conduit for a number of different purposes, as will be described in more detail below.

The fluid applicator may facilitate supply of a cleaning fluid to the conduit, such as a disinfectant/antibacterial fluid for cleaning an internal wall/surface of the conduit; or a coating fluid, such as a paint, sealant, mastic or the like onto an internal wall/surface of the conduit, applied as part of a maintenance or repair procedure. In an embodiment, the fluid applicator may be adapted to apply an electrostatic paint onto the conduit wall, polarised to be attracted towards the conduit. This may be achieved by oppositely polarising the conduit.

The atomiser may be for imparting a force on the fluid to direct the fluid towards the wall/surface of the conduit. The atomiser may be adapted for rotation to atomise the fluid according to the centrifugal principle. The atomiser may comprise a main disc or ring for imparting a force on the fluid to direct the fluid onto a wall/surface of the conduit. The atomiser may also include a secondary shield disc or ring, spaced from the main disc along a shaft of the atomiser, the secondary disc serving to prevent passage of fluid along the atomiser shaft. This may prevent any fluid from entering a motor coupled to the shaft, or indeed other parts of the fluid applicator.

Providing a housing for the atomiser, for housing the atomiser when in the deactivated position may assist in ensuring that it is not damaged, for example, during handling of the apparatus prior and/or subsequent to location in the conduit; and in avoiding injury to an operator. This may be of utility as the atomiser may have a relatively sharp edge (to facilitate passage of fluid from a surface of the atomiser in use). The atomiser may be biased towards the deactivated position by a biasing force, for example, by a spring, and may be adapted to be urged towards the activated position against the biasing force. The atomiser may be selectively urged towards the activated position. For example, the apparatus may comprise at least one piston/ram for urging the atomiser to the activated position. The apparatus may be arranged such that the piston is only caused to urge the atomiser to the activated position when rotated. For example, in embodiments of the invention, the atomiser may driven by a motor and the piston may only urge the atomiser to the activated position when the motor is activated.

The fluid applicator may be coupled to the body and located such that centralisation of the body within the conduit centralises the fluid applicator, to provide optimum distribution of fluid on an internal surface(s) or wall(s) of the conduit.

The fluid applicator may be releasably coupled to the body, to allow removal of the applicator for maintenance/cleaning purposes, or to facilitate replacement of the applicator with an alternative tool. The fluid applicator may further comprise at least one fluid nozzle or outlet adapted to direct fluid onto the rotary member for subsequent application to a wall/surface of the conduit. The nozzle may conveniently be coupled to the housing, and at least part of the nozzle may be removable or releasably mounted, to facilitate cleaning and maintenance.

The nozzle may comprise an integral part of the body, or a separate component adapted to be coupled to the body.

The apparatus may further comprise at least one imaging device, such as a camera, for viewing the inside of the conduit. The imaging device may be connected to the data coupling for outputting an image of the inside of the conduit. This may allow a real-time image of the inside of the conduit to be viewed, facilitating control of the apparatus and determination of conditions within the conduit to, amongst other things, locate any corrosion, determine whether cleaning or maintenance is required, monitor cleaning/maintenance procedures and to monitor passage of the body within the conduit. The apparatus may comprise a first imaging device for viewing in one direction along the conduit, and at least one further imaging device for viewing in a second, opposite direction along the conduit. This may facilitate viewing of the conduit both in front and behind the apparatus. Alternatively, the apparatus may comprise an imaging device mounted for movement relative to the body. This may facilitate viewing of the conduit ahead of and behind the apparatus, relative to a direction of travel.

The apparatus may further comprise at least one and preferably a plurality of light sources for illuminating the conduit. The light source may comprise a low power, robust source such as a light emitting diode (LED), but may alternatively comprise a filament or fluorescent light source.

The apparatus may further comprise a cleaning apparatus or tool, such as one or more fixed or moveable abrasive brush, blade, tooth, scraper or combination thereof for cleaning an internal surface of the conduit. The tools may be adapted to be releasably coupled to the body.

The apparatus may further comprise a self-cleaning assembly for maintaining at least part of the apparatus clean. Preferably, the self-cleaning assembly includes a passage for supplying a medium, such as air or another gas, to the apparatus. This may facilitate provision of a curtain of air/gas to protect the apparatus from soiling by cleaning or coating fluid, or by other materials present within the conduit dislodged during movement of the body. The self-cleaning assembly has a particular utility where the apparatus includes an imaging device, by preventing a viewing surface such as a lens of the imaging device from becoming coated or covered. The self-cleaning assembly may comprise at least one nozzle for supplying a medium to maintain the apparatus clean. Preferably, the self-cleaning assembly includes a plurality of nozzles mounted for directing jets of medium onto or near the part of the apparatus to be maintained clean, such as the imaging device. The self-cleaning assembly may also comprise a baffle or deflector for shaping the flow of cleaning medium.

The centralisation assembly may be moveable between retracted and extended positions for centralising the body within the conduit. Preferably, the centralisation assembly includes a plurality of extendable legs adapted to be brought into contact with an internal wall of the conduit. The assembly may comprise a first set of extendable legs for centralising the body in a first plane and a second set of extendable legs for centralising the body in a second plane. The second plane is angled (non-parallel), typically perpendicular, to the first plane. This may allow centralisation of the body within conduits of a wide range of shapes and dimensions, but particularly in square or rectangular conduits.

The centralisation assembly may comprise a plurality of pairs of legs coupled together in a scissors configuration for movement between retracted and extended positions. The assembly may also include a plurality of wheels, rollers, runners or the like for rolling/sliding contact with an internal surface of the conduit, to aid passage of the apparatus.

In an alternative embodiment, the centralisation assembly may include one or more sensors for detecting the location of the body with respect to the conduit, and may be adapted to adjust the position of the body to maintain the body centrally within the conduit.

Preferably, the centralisation assembly is pneumatically actuated, but may alternatively be hydraulically, electrically or otherwise actuated. The apparatus may include a fail-safe mechanism for de-activating the centralisation assembly to a fail-safe position. This may facilitate retrieval of the body, for example, in the event of the apparatus becoming lodged in the conduit. The fail-safe position of the centralisation assembly may be the retracted position. The fail-safe mechanism may include a valve for bleeding pressure from the centralisation assembly in the event of a shut-down. The valve may be adapted to bleed pressure only on shut-down, or to provide a constant pressure bleed.

The apparatus may comprise one or more bumper, slider or the like on the body, for facilitating passage of the body along the conduit. Alternatively, the apparatus may comprise a roller device having a plurality of wheels mounted on a bogie or pivot arm/plate, for assisting passage of the body within the conduit. The bumper/roller device facilitates passage over obstructions such as seams, flanges, nuts, bolt or rivet heads and the like within the conduit. The apparatus may comprise a plurality of roller devices, each of which may include at least three wheels mounted on a bogie. The wheels may be off-centre from a pivot about which the bogie is coupled to the body for rotation about the body. The roller device may form part of the centralisation assembly.

The transportation assembly may comprise a cable, wire or the like coupled to the body for moving the body along the conduit. The body may be adapted to be pulled along the conduit using the cable. Alternatively, the cable may possess sufficient rigidity to enable the body to be pushed along the conduit using the cable.

In preferred embodiments, the body may comprise or be coupled to a self-propelling transportation assembly for moving the body along the conduit, which may comprise driven wheels, tracks or the like.

The data coupling may be provided together with or may form part of the transportation assembly. In particular, the data coupling may form at least part of a cable of the transportation assembly. The apparatus may further comprise one or more of an electrical connection; a cleaning fluid supply; a coating fluid supply; a data cable; a pneumatic power supply; and a hydraulic power supply. These may take the form of wires, cables or tubes, as appropriate, which may be provided as a single bundle such as in an umbilical cable. The umbilical cable may include a connector for facilitating quick connection of all the cables/tubes in the bundle to the body. Alternatively, the cables/tubes may be provided separately.
The apparatus may further comprise one or more measuring devices for measuring one or more internal dimensions of the conduit. The measuring device may comprise a potentiometer for providing an electrical signal indicative of a position of the centralisation assembly. This may allow the width and height of the conduit to be determined. Alternatively, the measuring device may comprise a laser or other sensor.

The apparatus may also comprise a device for sensing distance travelled by the body, which may be associated with the transportation assembly. For example, the device may measure the length of cable reeled in or paid out, or an odometer for directly measuring distance travelled by the body. The apparatus may also include an inclinometer, gyroscope or the like for determining the angle of the body (indicative of the body traversing an incline or decline in the conduit), and a sensor such as a compass for determining direction of travel of the body. This may facilitate generation of a map of the conduit.

The apparatus may further comprise an environmental sampling device, which may include one or more of a swab, a fluid sampling device and an air/gas sampling device.

The apparatus may comprise a control station coupled to the body via the data coupling, for controlling operation of the apparatus. The control station is preferably adapted to be located externally of the conduit. The control station thus provides an interface for controlling operation of the apparatus. The control station may be adapted to send and receive data to and from the apparatus via the data coupling. The control station may comprise a dedicated processor, but preferably forms part of a personal computer (PC), for controlling the supply and receipt of data to and from the apparatus. The control station may be adapted for one or more of storing data received from the apparatus such as data regarding the dimensions of the conduit and images of the conduit; controlling speed of travel of the body along the conduit; controlling the supply of cleaning and/or coating fluid to the apparatus; controlling the supply of pneumatic or hydraulic fluid to the apparatus or power supply to an activation device of the apparatus; controlling supply of power to the imaging device and/or light source; and controlling operation of the centralisation and/or transportation assembly.

The transportation assembly may comprise a winch for reeling a cable coupled to the body, for moving the body within the conduit. The control station may control operation of the winch to thereby control movement of the body.

According to a second aspect of the present invention, there is provided a method of inspecting a conduit, the method comprising the steps of:
locating a conduit inspection apparatus body within the conduit; centralising the body within the conduit; coupling the body to a control station by a data coupling; moving an atomiser of a fluid applicator from a deactivated position where the atomiser is stored in an atomiser housing to an activated position; with the atomiser in the activated position, using the atomiser to supply a fluid to the surface of the conduit; and
translating the body along the conduit.
The method may further comprise viewing an image of the conduit using an imaging device.

The method may further comprise cleaning the conduit by removing any material adhered to the internal wall of the conduit. This may be achieved by mechanically removing materials using an abrasive tool and/or by jetting cleaning fluid onto the internal surface of the conduit.

The method may further comprise applying a coating to the internal surface of the conduit. The coating may be a paint, sealant or mastic.

The method may further comprise controlling centralisation of the body within the conduit and transportation of the body along the conduit via the control station.

Embodiments of the present invention will now be described, by way of example only, with reference to the accompanying drawings, in which:
Fig. 1 is a schematic illustration of a conduit inspection apparatus and a conduit inspection assembly incorporating the conduit inspection apparatus, the apparatus falling outwith the scope of the claimed invention but illustrating certain features common to an embodiment of the present invention, the apparatus shown in use;
Fig. 2 is an enlarged, detailed front right perspective view of the conduit inspection apparatus of Fig. 1, shown prior to activation of a centralisation assembly of the apparatus;
Fig. 3 is an enlarged, detailed front top perspective view of the conduit inspection apparatus of Fig. 1, shown following partial activation of the centralisation assembly of the apparatus;
Fig. 4 is an enlarged, detailed front right perspective view of the conduit inspection apparatus of Fig. 1, shown following full activation of the centralisation assembly of the apparatus;
Fig. 5 is a view of the conduit inspection apparatus similar to Fig. 3;
Fig. 6 is an enlarged perspective view of a nozzle assembly forming part of the conduit inspection apparatus of Figs. 1-5;
Fig. 7 is a longitudinal sectional view of part of the nozzle assembly of Fig. 6;
Fig. 8 is an enlarged perspective view of an imaging device forming part of the conduit inspection apparatus of Figs. 1-5;
Fig. 9 is a longitudinal sectional view of the imaging device of Fig. 8, also showing a self-cleaning assembly of the apparatus;
Fig. 10 (presented on the same sheet as Fig. 1) is an enlarged view of an umbilical cable forming part of the conduit inspection apparatus of Figs. 1-9;
Fig. 11 is a front right perspective view of a conduit inspection apparatus in accordance with a preferred embodiment of the present invention, shown prior to activation of a centralisation assembly of the apparatus;
Figs. 12-15 are side, plan, front end and rear end views of the inspection apparatus of Fig. 11, respectively;
Figs. 16 and 17 are rear right perspective and front left perspective views of the inspection apparatus of Fig. 11, shown following activation;
Fig. 18 is a plan view of the inspection apparatus of Fig. 11 following partial activation of the centralisation assembly of the apparatus;
Fig. 19 is a side view of a part of the inspection apparatus of Fig. 11;
Fig. 20 is a view of a rear part of a body module forming part of the inspection apparatus of Fig. 11;
Figs. 21 and 22 are front left perspective and plan views of the housing forming part of a body module of the inspection apparatus of Fig. 11;
Figs. 23 to 26 are front left, rear left, partially sectioned rear left and plan views, respectively, or a fluid applicator forming part of the inspection apparatus of Fig. 11, shown in a deactivated position;
Fig. 27 is an enlarged view of a rotary member forming part of the fluid applicator of Figs. 23 to 26;
Figs. 28-30 are front left perspective, plan and partially sectioned plan views of the fluid applicator of Figs. 23-26 in an activated position;
Fig. 31 is an exploded perspective view of an imaging assembly forming part of the inspection apparatus of Fig. 11; and
Fig. 32 is a plan view of an alternative fluid applicator for the inspection apparatus of Fig. 11.

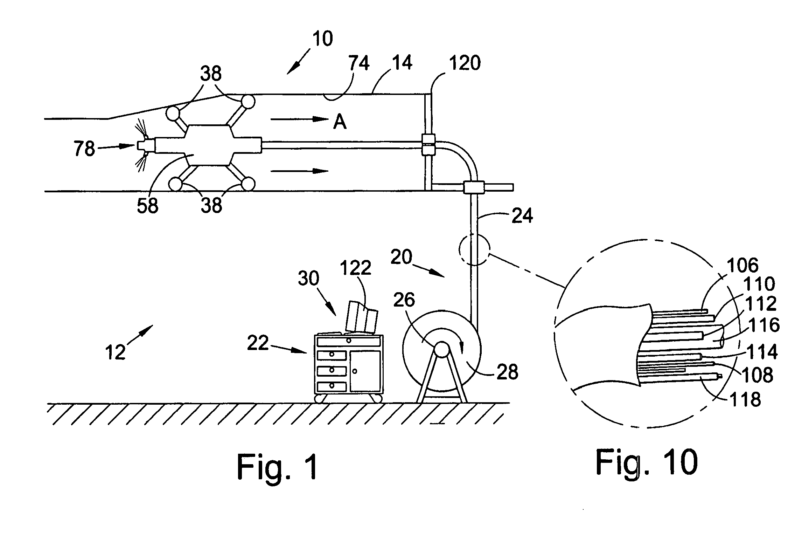

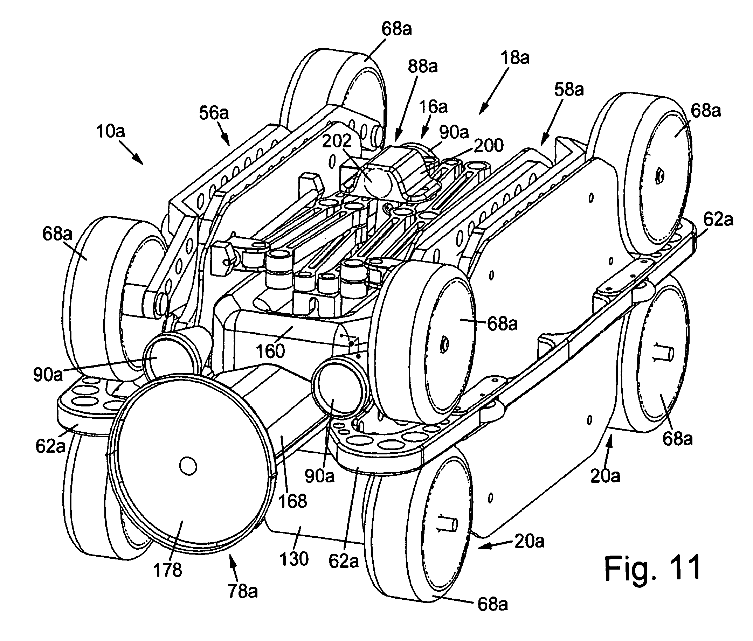

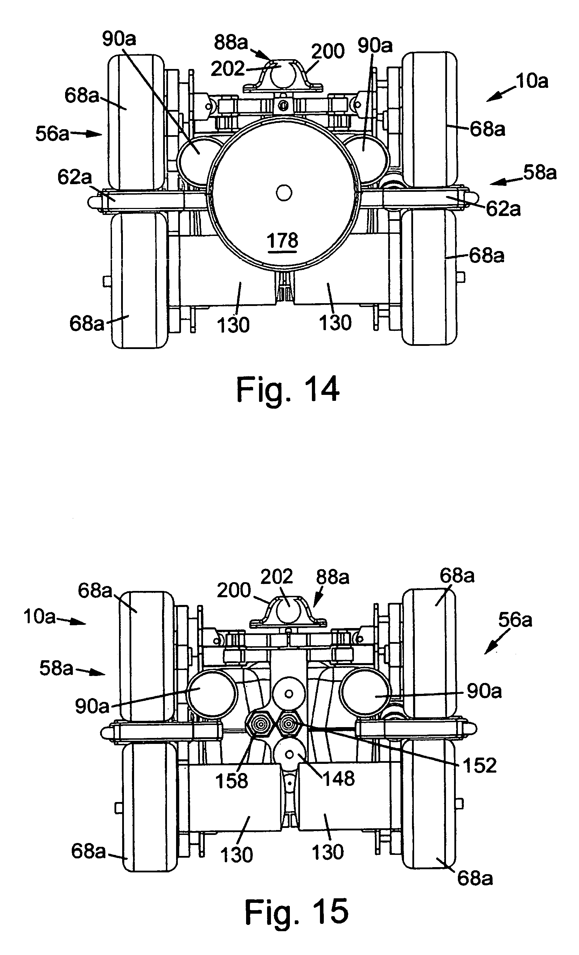

Referring firstly to Fig. 1, there is shown a schematic illustration of a conduit inspection apparatus indicated generally by reference numeral 10, the apparatus forming part of a conduit inspection assembly indicated generally by reference numeral 12. The apparatus 10 falls outwith the scope of the present, claimed invention, but shares many features with a preferred embodiment which will be described below in relation to Figs. 11 to 32, and is therefore described for the purpose of explaining certain features of the invention. The assembly 12 is shown in Fig. 1 in use during inspection of a conduit such as a ventilation duct 14, of the type typically used for ventilation in buildings. The inspection apparatus 10 is transported along the duct 14 in the direction of the arrow A, to carry out inspection, cleaning and maintenance procedures, as will be described in more detail below.

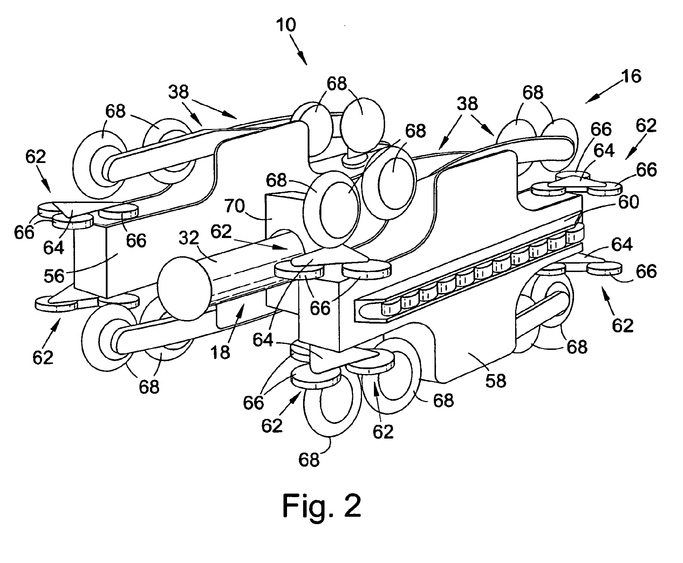

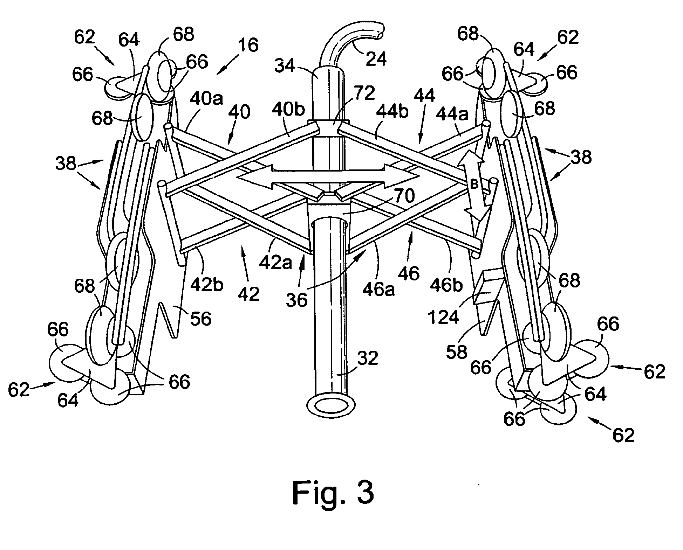

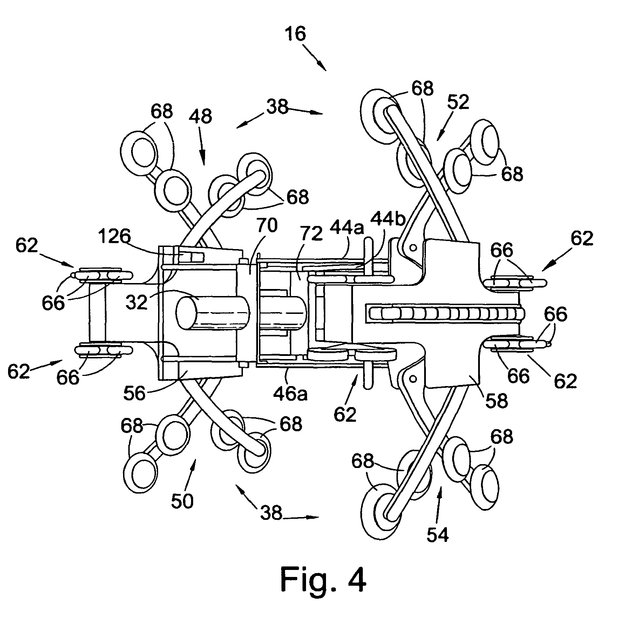

The apparatus 10 is also shown in the enlarged, detailed front right and top perspective views of Figs. 2 and 3, where the apparatus is shown prior to and following partial activation, respectively, of a centralisation assembly 16 of the apparatus. Fig. 4 is a view of the apparatus following full activation of the centralisation assembly 16.

The inspection apparatus 10 includes a body in the form of body module 18 adapted for location within the duct 14, as shown in Fig. 1. The centralisation assembly 16 is coupled to the body 18 for centralising the body within the duct 14, and a transportation assembly 20, shown in Fig. 1, transports the body along the duct. A data coupling is provided for data communication between the body 18 and a control station 22 (Fig. 1). In the apparatus shown, the data coupling, which will be described in more detail below, is provided within an umbilical cable 24 which forms part of the transportation assembly 20.

The transportation assembly 20 also includes a winch 26 and a drum 28 for reeling the umbilical cable 24, to transport the apparatus 10 along the duct 14. Operation of the winch 26 and drum 28 to reel the umbilical cable 24 is controlled via the control station 22, which includes a personal computer (PC) 30.

Considering the inspection apparatus 10 in more detail, the body module 18 includes a central tube or housing 32 which includes a connector (not shown) for connection with the umbilical cable 24 at a leading end 34 of the tube 32. The centralisation assembly 16 is expandable for centralising the body 32 within the duct 14, and comprises a first set 36 of extendable legs (Fig. 3) and a second set of extendable legs 38 (Fig. 4).

The first set of legs 36 are expandable for centralising the tube 32 within the duct 14 in a horizontal plane, and the apparatus 10 is shown in Fig. 3 following movement of the legs 36 to an extended position. The second set of legs 38 are extendable for centralising the tube 32 within the duct 14 in a vertical plane, and the apparatus 10 is shown in Fig. 4 following movement also of the legs 38 to an extended position.

The first set of legs 36 comprise left and right pairs of legs 40, 42 and 44, 46 arranged in scissors configurations for movement between a retracted position (Fig. 2) and an extended position (Fig. 3). In a similar fashion, the second set of legs 38 comprise left and right pairs of legs 48, 50 and 52, 54 which are moveable between a retracted position (Fig. 2) and an extended position (Fig. 4). Each leg pair 48, 50 and 52, 54 are similarly arranged in a scissors configuration and the leg pairs are mounted on respective side plates 56, 58 of the apparatus 10. The legs 48 are geared relative to the legs 50, and the legs 52 relative to the legs 54, to ensure that the legs move by the same amount on activation. This ensures centralisation in the vertical plane. The legs 40, 42 are geared relative to the legs 44, 46 in a similar fashion, for centralisation in a horizontal plane.

The apparatus 10 also includes devices for measuring dimensions of the duct 14, in the form of width and height potentiometers 124, 126. The width potentiometer 124 (Fig. 3) measures movement of leg 44b along the sideplate 58 through an arm 128, the position of which varies the voltage output of the potentiometer. In a similar fashion, the height potentiometer 126 (Fig. 4) is coupled to a leg of leg pair 48, and measures rotation of the leg through a wiper. This data is analysed by the PC 30 to determine the position of the leg sets 36, 38 and thus the width and height of the duct.

As shown in particular in Fig. 2, the side plates 56, 58 each include a set of side rollers 60 (one shown in the Figure) and four roller devices 62, shown also in Figs. 3 and 4. Each roller device includes a triangular bogie or pivot plate 64 pivotally mounted to the respective side plate 56, 58, with a wheel 66 at each corner of the bogie. The bogie 64 is free to rotate with respect to the side plates 56, 58 and eases passage of the apparatus 10 through the duct 14, in the event that the apparatus encounters an obstruction such as a seam, flange, nut, bolt or rivet head or the like extending into the duct 14. In a similar fashion, each of the leg pairs 48, 50 and 52, 54 carries a number of wheels 68 for easing passage of the apparatus along the duct 14 both in the retracted and extended positions of Figs. 2 and 4.

Legs 40a, 42a and 44a, 46a of the leg pairs 40, 42, 44 and 46 respectively are coupled at one end to a sliding collar 70 mounted on the tube 32. The other ends of the arms 40a, 42a and 44a, 46a are connected to the side plates 58, 60. In a similar fashion, legs 40b, 42b, 44b and 46b are mounted at one end to a fixed collar 72 and at the other end are slidably coupled to the side plates 56, 58. The centralisation assembly 16 is pneumatically activated, and a piston (not shown) is coupled to the sliding collar 70 to move the collar in the direction of the arrow B (Fig. 3). By controlling supply of pressurised air to the cylinder, the position of the collar 70 is controlled, in turn controlling movement of the leg pairs 40, 42 and 44, 46 between the retracted position of Fig. 1 and the extended position of Fig. 3.

The legs of the leg sets 48, 50 and 52, 54 are similarly moved between the retracted and extended positions by cylinders (not shown). On full activation (Fig. 4), all of the legs are brought into contact with an internal surface 74 of the duct 14, to centralise the tube 32 within the duct.

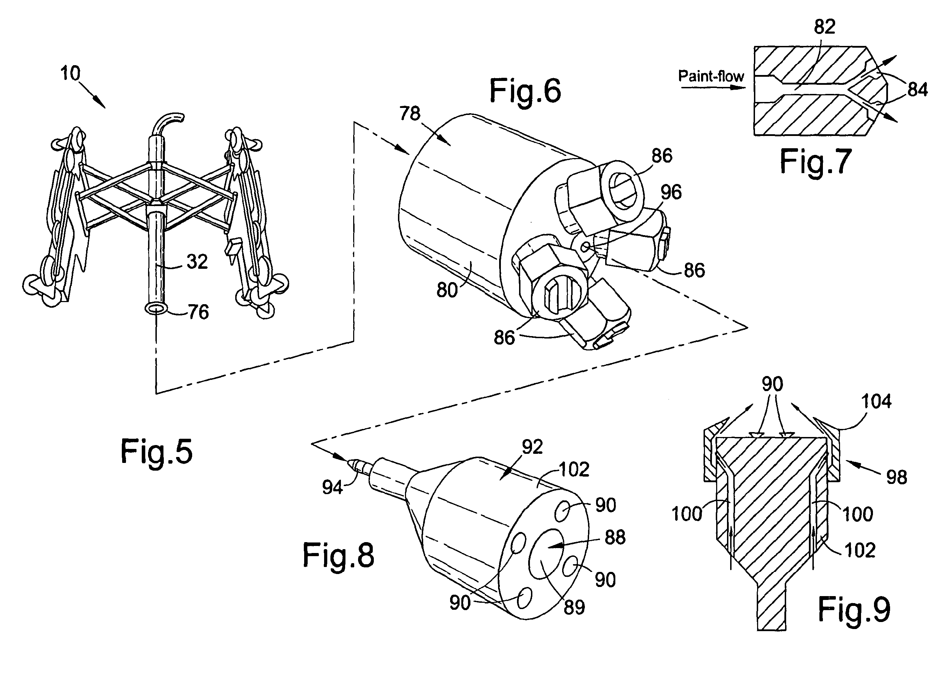

Turning now to Fig. 5, there is shown a view of the inspection apparatus 10 similar to that of Fig. 3. A leading end 76 of the tube 32 carries a fluid applicator in the form of a nozzle assembly 78, which falls outwith the scope of the claimed invention, and which is shown in more detail in the enlarged perspective and sectional views of Figs. 6 and 7. The nozzle assembly includes a housing 80 defining a main flow passage 82 and four branch outlet passages 84, as shown in Fig. 7. As will be described, the passages 82, 84 allow supply of a coating or cleaning fluid onto an internal surface 74 of the duct. Each outlet passage 84 includes a nozzle 86 for generating a jet of fluid, and the nozzles 86 are each mutually circumferentially spaced at 90° spacings, and inclined with respect to the direction of travel A of the inspection apparatus (Fig. 1).

An imaging device in the form of a camera 88 is mounted in a detachable camera head attachment 92. Four light sources in the form of LEDs 90 (or alternatively two or more halogen bulbs) are spaced around the camera lens in the camera head attachment 92. The attachment 92 includes a releasable jack 94 for electrical connection with a socket 96 in the nozzle housing 80, and thus to the control station 22. This allows power supply to the camera 88 and LEDs 90, as well as transmission of image data from the camera.

Fig. 9 is a longitudinal sectional view of the camera head attachment 92, also illustrating a self-cleaning assembly 98. The self-cleaning assembly 98 includes flow passages 100 formed in a housing 102 of the camera head attachment 92, and a baffle 104 mounted around the housing. Air is supplied along the flow passages 100, and directed by the baffle 104 to form an air curtain in the vicinity of the camera lens 89. This prevents the camera lens 89 from becoming obscured by coating or cleaning fluids, and from any materials present within the duct 14, and keeps the LEDs 90 clean.

As discussed above, the control station 22 is coupled to the inspection apparatus 10 through the umbilical cable 24. As shown in Fig. 10 (presented on the same sheet as Fig. 1), the umbilical cable provides power to the inspection apparatus, data transmission to and from the apparatus, supplies cleaning/coating fluids and pneumatic air supply. Power is provided by positive and negative electrical wires 106, 108; pneumatic air supply to the three cylinders of the centralisation assembly 16 through respective tubes 110, 112 and 114; cleaning/coating fluids through supply tube 116; and data transmission through data cable 118.

The assembly 12 may also include a device (not shown) for measuring distance travelled by the apparatus 10, typically by measuring the length of cable 24 paid out/reeled in. Also, an inclinometer (not shown) may be provided, for measuring an incline/decline in the duct 14, and a compass (not shown) or the like, for determining a direction of travel of the apparatus. This data allows a map of the duct 14 to be generated by the PC 30.

The apparatus 10 fail-safe shuts down in the event, for example, of snagging or lodging in the duct 14. This may be achieved by providing the centralisation assembly 16 with a bleed valve (not shown) which bleeds pressure from the system on shut down, or constantly (requiring constant over-pressure in use).

The method of installation and operation of the inspection apparatus 10 will now be described in more detail. The inspection assembly 12 is brought on site and the inspection apparatus 10 connected to the control station 22 by the umbilical cable 24, as described above. The inspection apparatus 10 is located at the far end (not shown) of the duct 14, for travel towards the near end 120 shown in Fig. 1. This is achieved, for example, by driving a small remote controlled vehicle (not shown) along the duct 14, carrying a winch cable to the far end of the duct. The cable is attached to the inspection apparatus 10, which is then pulled to the far end of the duct.

The centralisation assembly 16 is then activated to move to the expanded position of Fig. 4, thereby centralising the tube 32 in the duct 14 as shown in Fig. 1. Pneumatic air supply to the apparatus through the tubes 110, 112 and 114 is controlled by the control station 22.

The winch 26 and drum 28 are then activated to wind-in the umbilical cable 24, pulling the inspection apparatus 10 along the duct 14. The LEDs 90 and camera 88 are activated to provide an image from inside the duct, which is viewed on the PC monitor 122 and stored on the PC 30.

This allows a skilled operator to determine whether any cleaning or coating of the duct 14 is required, and the particular locations of any problem areas. The inspection apparatus 10 may then be returned to the far end of the duct 14 by deactivating the centralisation assembly 16 and repeating the steps described above.

On a second pass of the inspection apparatus 10 through the duct 14, a cleaning fluid such as disinfectant or antibacterial fluid may be supplied through the tube 116 to clean the duct wall 74, or a coating fluid such as paint, a sealant or a mastic may be applied. Alternatively, paint may be applied in a paint application procedure subsequent to any cleaning procedure.

Simultaneously, the cleaning/coating procedure is monitored by the operator through the camera 88, which is protected from soiling by the air curtain supplied through the air passages 100 and baffle 104.

It will be understood that the cleaning or coating fluid is supplied from the rear end of the inspection apparatus 10, such that passage of the inspection apparatus 10 through the duct 14 does not disturb the applied cleaning or coating fluid.

Turning now to Fig. 11, there is shown a perspective view of a conduit inspection apparatus in accordance with a preferred embodiment of the present invention, the inspection apparatus indicated generally by reference numeral 10a. The conduit inspection apparatus 10a forms part of a conduit inspection assembly similar to the assembly 12 shown in Fig. 1, and would thus be provided in place of the inspection apparatus 10. Like components of the inspection apparatus 10a with the inspection apparatus 10 of Figs. 1-10 share the same reference numerals with the addition of the suffix a.

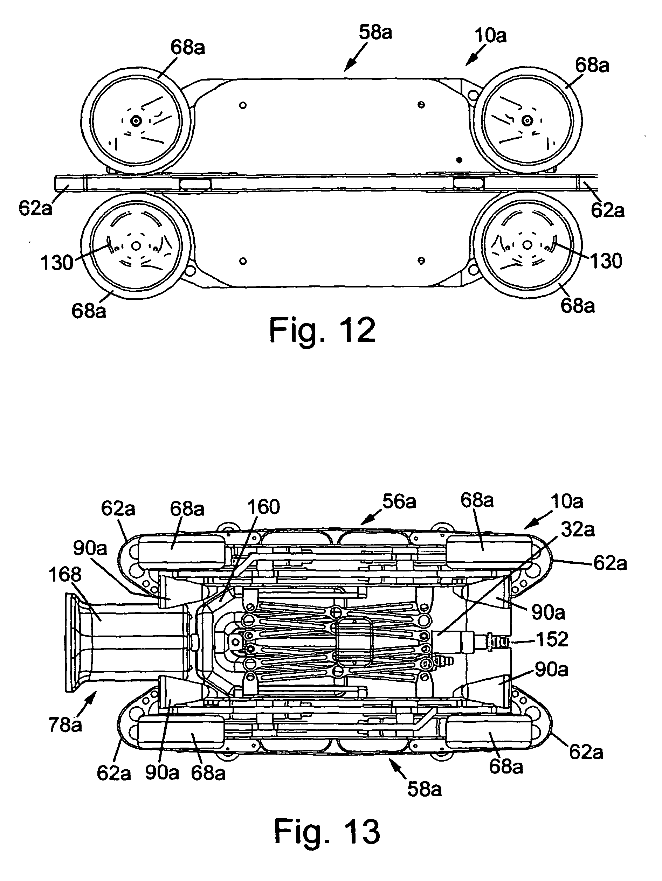

The inspection apparatus 10a, which is also shown in the side, plan, front end and back end views of Figs. 12-15, respectively, includes a centralisation assembly 16a coupled to a body module 18a and a transportation assembly 20a. However, whilst the inspection apparatus 10a is connected to a control station similar to the station 22 shown in Fig. 1, the transportation assembly 20a includes motors 130 associated with the wheels 68a provided on the lower half of the apparatus 10a. The motors are controlled and operated by the control station to drive the apparatus 10a along the duct 14, and it will be understood that by varying the operation of the motors 130 on the left or right side of the apparatus 10a, precise directional control can be achieved to manoeuvre the apparatus 10a within the duct 14. Thus it is not necessary to transport the apparatus 10a within the duct 14 using an umbilical cable coupled to the apparatus 10a. However, it will be understood that an umbilical cable is provided for controlling operation of the apparatus 10a and for supplying paint and the like, as will be described below. The motors 130 are offset relative to an axle of the wheels 68a to improve ground clearance.

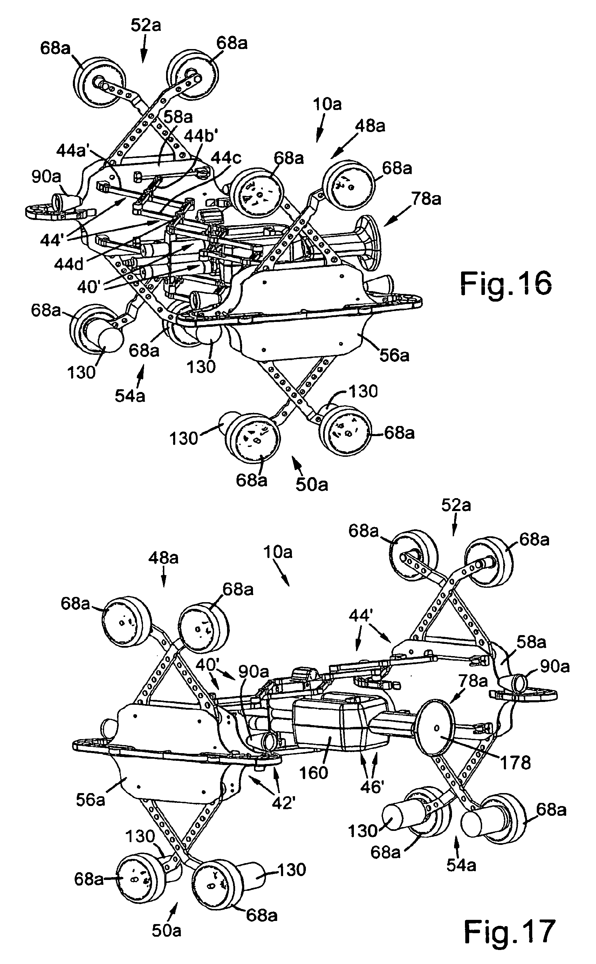

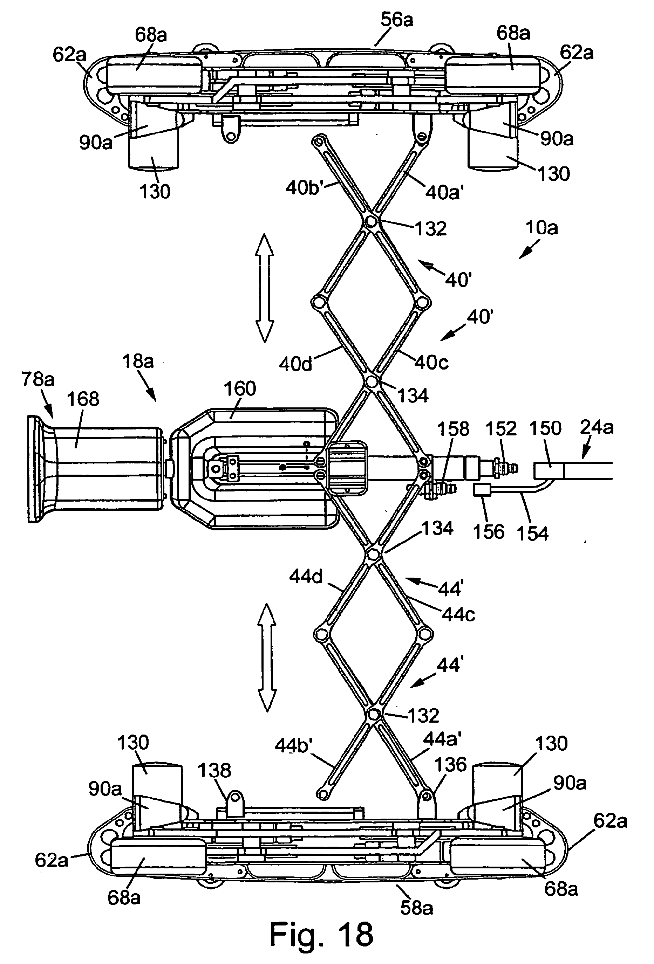

The inspection apparatus 10a is shown in a fully activated state in the rear perspective view of Fig. 16 and the front perspective view of Fig. 17. As shown in Figs. 16 and 17, the apparatus 10a includes two sets of leg pairs 40', 42', 44' and 46'. Fig. 18, which is a view of the apparatus 10a following partial activation of the centralisation assembly 16a, shows the upper two sets of these leg pairs 40' and 44', and it will be noted that the leg pairs are arranged in a double-scissors configuration. This provides a greater degree of expansion when compared to the apparatus 10. The leg pairs 44' include legs 44a' and 44b' coupled at one end to the side 58a, and which rotate relative to one another about a pivot 132. The legs 44a', 44b' are also coupled to a second set of legs 44c, 44d, coupled about a pivot 134 and secured to a body module 18a of the apparatus 10a. The legs 44a', 44b' are coupled to the side 58a by mountings 136, 138 respectively. However, it will be noted that the leg 44b' has been illustrated disconnected from the mounting 138, for illustration purposes. It will be understood that the leg pairs 40', 42' and 46' are arranged in a similar fashion.

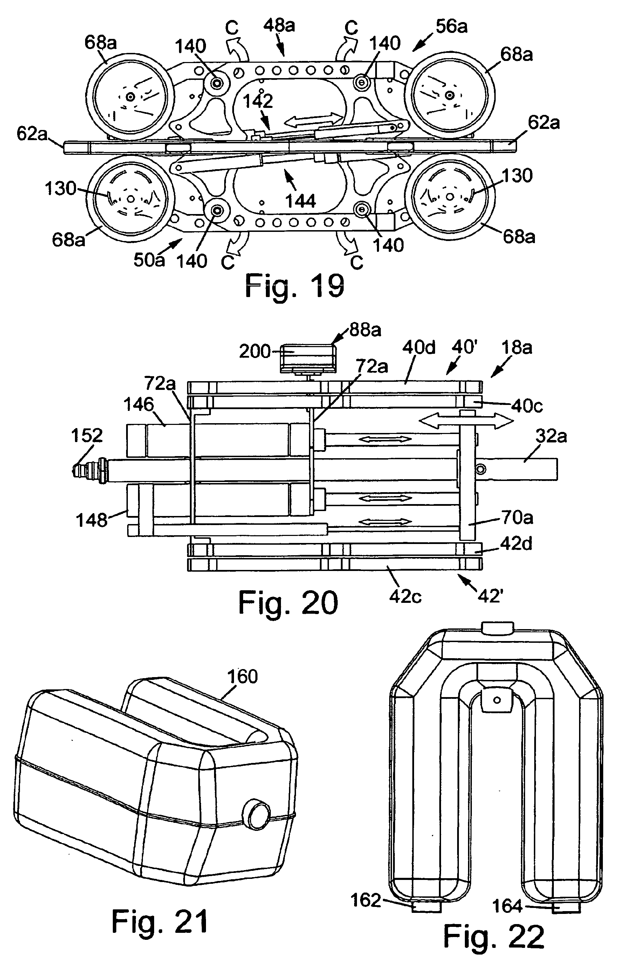

The apparatus 10a also includes leg pairs 48a, 50a, 52a and 54a for centralising the apparatus 10a in a vertical plane, as shown in Figs. 16 and 17. The arrangement of the leg pairs 48a and 50a of the side 56a are also shown in Fig. 19, and it will be noted that the legs of each leg pair 48a, 50a are mounted for rotation about pivots 140. In this fashion, the legs move towards the extended position by rotation about the pivots 140 in the direction of the arrows C shown in Fig. 19. Fig. 19 also illustrates pistons 142, 144 which are operated to move the leg pairs 48a, 50a to the extended position. It will be understood that similar pistons are provided for operating the leg pairs 52a, 54a.

Turning now to Fig. 20, there is shown a side view of an end part of the body module 18a. The body module 18a carries two pistons 146, 148 for moving the leg pairs 40', 42', 44' and 46' to the extended position. In a similar fashion to the apparatus 10, the pistons 146, 148 are connected by fixed brackets 72a to a central tube 32a, and a sliding collar 70a is mounted around the tube 32a. Activation of the pistons 146, 148 moves the sliding collar 70a relative to the tube 32a. The leg pairs 40', 42', 44' and 46' are coupled to the rear fixed bracket 72a and to the sliding collar 70a, and are moved by actuating the pistons 146, 148.

As shown in Fig. 18, an umbilical 24a is connected to the apparatus 10a, the umbilical 24a having a load bearing female connector 150 for coupling to a corresponding male connector 152 on the body module 18a. A branch 154 extends from the female connector 150 and includes a branch female connector 156 for engaging a branch male connector 158 on the module 18a. This branch 154 provides for supply of paint to the apparatus 10a. In this way, mechanical loading on the umbilical 24a is borne by the connector 150, and not by the branch connector 154. A similar arrangement is provided for pneumatic and electrical connection to the apparatus 10a.

Indeed, turning to Figs. 21 and 22, there are shown perspective and plan views of a housing 160 which contains control circuitry, valve arrangements and the like for controlling operation of the apparatus 10a. The housing 160 includes pneumatic and electric connection ports 162, 164 for connecting to the branches extending from the connector 150. The housing 160 is releaseably attached to the body module 18a, and provides protection for the relevant circuitry and the like from fluid sprayed onto the duct 14 and from mechanical impact.

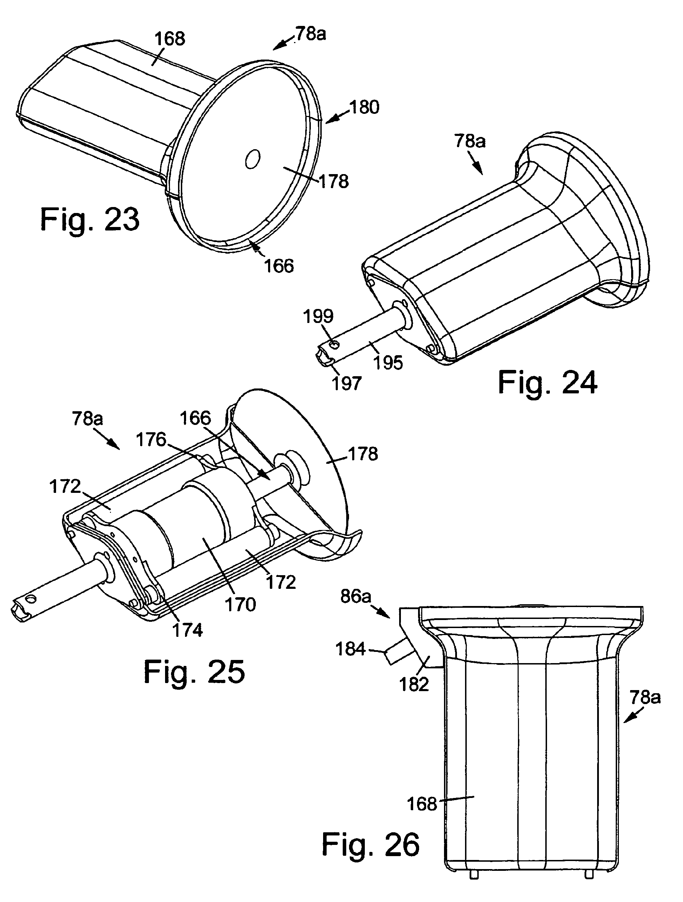

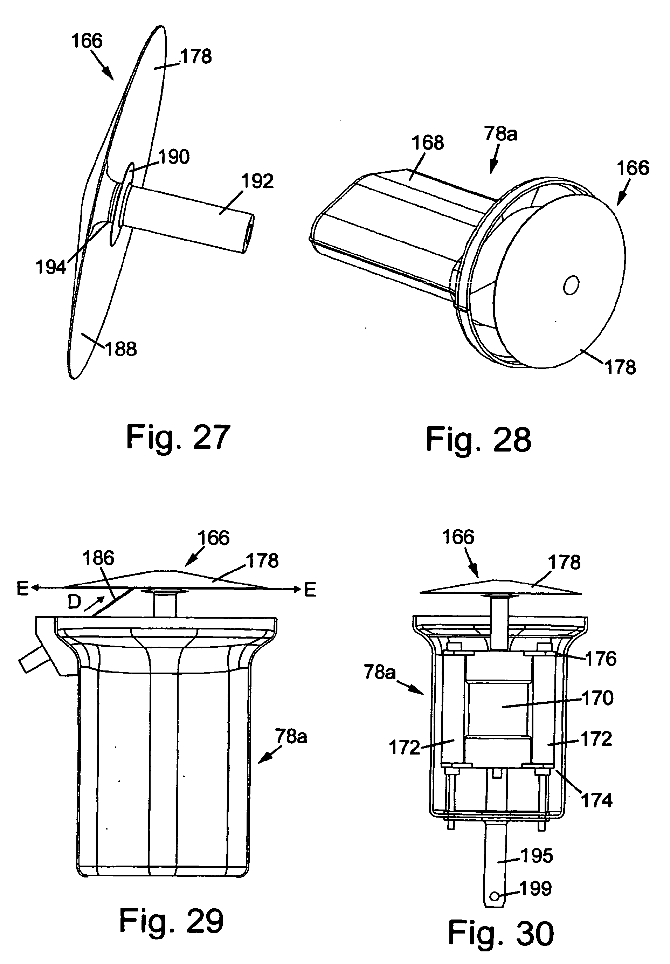

The apparatus 10a also includes a fluid applicator 78a, which is shown more clearly in the front and rear perspective views of Figs. 23 and 24, as well as the partially cut away perspective view of Fig. 25 and the plan view of Fig. 26. The fluid applicator 78a includes a rotary member in the form of an atomiser 166, which is shown in Fig. 27. The fluid applicator 78a also includes a housing 168, and the atomiser 166 is moveable between a deactivated or stowed position, shown in Figs. 23-26, and an activated or deployed position, shown in the front perspective, plan and partial sectional views of Figs. 28-30, respectively.

Prior to location of the apparatus 10a in the duct 14, the atomiser 166 is in the deactivated position, where it resides within the housing 168. This ensures that the atomiser 166 is not damaged during handling, and prevents any potential injury to an operator.

The fluid applicator 78a also includes a motor 170 for driving and rotating the atomiser 166, and two pistons 172, for moving the atomiser 166 between the deactivated and the activated positions. The motor 170 and pistons 172 are mounted between brackets 174, 176 and are moveable within the housing 168. On activation of the pistons 172, the atomiser 166 is moved to the activated position of Figs. 28 to 30, such that a disc 178 of the atomiser protrudes from an end 180 of the housing 168. The atomiser 166 is spring biased towards the deactivated position. In this fashion, when pressure is bled from the pistons 172 and indeed when the pistons are in the deactivated position shown in Fig. 25, the atomiser 166 is urged to the deactivated, stowed position. The apparatus 10a is arranged such that the pistons 172 are only activated to urge the atomiser 166 to the activated position when the motor 170 has been activated. This provides a fail-safe ensuring the atomiser 166 is returned to the deactivated position when it is not required.

The fluid applicator 78a also includes a nozzle 86a coupled to the housing 168, as shown in Figs. 26 and 29. The nozzle 86a includes a connecting body 182 and a removable jet portion 184 secured to the body 182 and extending through the housing 168. This allows the jet 184 to be removed for cleaning purposes and the like.

As shown in Fig. 29, when the atomiser 166 has been moved to the activated position, a jet 186 of paint or the like may be directed onto an inner surface 188 of the atomiser disc 178, in the direction of the arrow D. Rotation of the disc 178 causes the paint to be ejected in the direction of the arrows E and onto the internal surface 74 of the duct 14. It has been found that the atomiser 166 provides a particularly efficient method of coating the duct internal surface 74.

The atomiser 166 also includes a small inner shield disc or ring 190 on a shaft 192 of the atomiser 166. This inner ring 190 prevents passage of paint along the shaft 192 and into the motor 170, as any paint collecting in the area 194 tends to travel onto the inner ring 190, which ejects the paint in the direction of the arrow E.

The fluid applicator 78a is provided as a removable attachment connected to the tube 32a of the body module 18a by a support shaft 195 shown, for example, in Figs. 24 and 25. The shaft 195 includes a notch 197 for engaging a locator pin (not shown) and an aperture 199 for receiving a locking pin, to secure the fluid applicator 78a to the body module 18a. This allows the applicator 78a to be removed for cleaning/maintenance or to be replaced with an alternative tool, such as an abrasive cleaning tool.

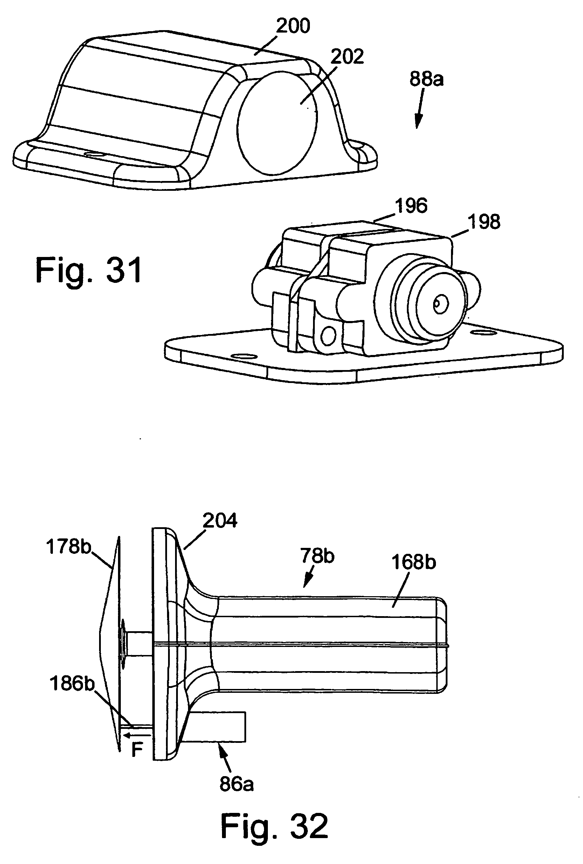

Turning now to Fig. 31, there is shown an exploded perspective view of a camera assembly 88a of the apparatus 10a. The camera assembly 88a differs from the camera 88 of the apparatus 10 in that it includes two separate cameras 196, 198 provided back to back, for viewing in both directions along the duct 14. The camera assembly 88a includes a cover 200 carrying lenses 202 (one shown) which cover and protect the cameras 196, 198. The apparatus 10a also includes lights 90a on both ends of the apparatus, for viewing the duct 14 in either direction.

The apparatus 10a also includes bumpers or sliders 62a, typically of a plastics or polymeric material such as a nylon or PTFE, for easing passage of the apparatus 10a around corners and over obstacles in the duct 14.

The method of operation of the apparatus 10a is the same as the apparatus 10 of Figs. 1-10, save that the apparatus 10a is self-driven along the duct 14, as described above.

Turning finally to Fig. 32, there is shown an alternative fluid applicator 78b. The applicator 78b is the similar to the applicator 78a of Figs. 23 to 30, except the applicator 78b includes a nozzle assembly 86a which is located behind a flared portion 204 of housing 168b that accommodates the atomiser disc 178b. Location of the nozzle assembly 86a in this position prevents damage to the nozzle assembly during operation of the apparatus 10a due, for example, to striking an obstacle in the duct 14. The nozzle assembly 86a directs a jet 186b of paint or the like in the direction of the arrow F onto the atomiser disc 178b, from where it is ejected in a similar fashion to that described above.

Various modifications may be made to the foregoing with the scope of the present invention.

For example, a combination cleaning/coating fluid may be applied.
The light source may alternatively comprise a filament, fluorescent or halogen light.

In a particular embodiment, the nozzle may be adapted to supply an electrostatic paint, polarised to be attracted towards an internal surface of the duct.

The apparatus may further comprise cleaning apparatus such as one or more abrasive brush, blade, tooth, scraper or combination thereof for cleaning an internal surface of the conduit.

The centralisation assembly may include sensors for detecting location of the body within the conduit and may be adapted to adjust the position of the body to maintain the body centrally within the conduit.

The cable may posses sufficiently rigidity to enable the body to be pushed along the conduit using the cable. Alternatively, the body may comprise or be coupled to a transportation assembly for self-propelling the body along the conduit, which may comprise driven wheels, tracks or the like.

The cables/tubes may be provided separately instead of in a single umbilical cable.

The apparatus may further comprise an environmental sampling device, which may include one or more of a swab, fluid and air sampling devices.

The legs of the centralisation assembly may be extendable to provide adjustment for use of the apparatus in a wider range of conduits of different dimensions. The legs may be telescopic or may include extension pieces/sections for increasing or decreasing the leg length.

The imaging device may be mounted on an extension arm and located adjacent the fluid applicator, at a leading/trailing end of the apparatus (depending upon the direction of travel), or may be located extending through the nozzle assembly/atomiser.

In an alternative, an apparatus may be provided including both a rotary member (atomiser) and a nozzle/nozzle assembly for applying a fluid directly to an internal surface of a conduit. For example, a nozzle assembly may be provided for applying a cleaning fluid, and an atomiser for applying a coating fluid, or vice-versa.

## Claims

1. Conduit inspection apparatus (10a) comprising:
a body (18a) adapted for location within a conduit (14); a centralisation assembly (16a) for centralising the body (18a) within the conduit (14);
a transportation assembly (20a) for transporting the body (18a) along the conduit (14);
a data coupling (24a) for data communication between the body (18a) and a control station (22); and
a fluid applicator (78a) for supplying a fluid to a surface (74) of the conduit (14);
**characterised in that** the fluid applicator (78a) comprises an atomiser (166) which is moveable between a deactivated position and an activated position, in the activated position the atomiser (166) serving for supplying the fluid to the surface (74) of the conduit (14); and **in that** the apparatus further comprises
a housing (168) for storing the atomiser (166) when in the deactivated position.

2. Apparatus (10a) as claimed in claim 1, wherein the atomiser (166) is for imparting a force on the fluid to direct the fluid towards a surface of the conduit (14).

3. Apparatus (10a) as claimed in claim 2, wherein the atomiser (166) has a main disc (178) for imparting a force on the fluid.

4. Apparatus (10a) as claimed in claim 3, wherein the atomiser (166) includes a secondary shield disc (190) spaced from the main disc (178) along a shaft (192) of the atomiser (166), the secondary disc (190) serving to prevent passage of fluid along the atomiser shaft (192).

5. Apparatus (10a) as claimed in any preceding claim, wherein the atomiser (166) is biased towards the deactivated position.

6. Apparatus (10a) as claimed in any preceding claim, wherein the atomiser (166) is selectively urged towards the activated position.

7. Apparatus (10a) as claimed in claim 6, wherein the apparatus comprises at least one piston (172) for urging the atomiser (166) to the activated position.

8. Apparatus (10a) as claimed in claim 6 or 7, wherein the apparatus is arranged such that the atomiser (166) is only urged to the activated position when it is rotated.

9. Apparatus (10a) as claimed in claim 8, when dependent on claim 7, wherein the fluid applicator (78a) includes a motor (170) for rotating the atomiser (166), and wherein the piston (172) is arranged to urge the atomiser (166) to the activated position when the motor (170) is activated.

10. Apparatus (10a) as claimed in any preceding claim, wherein the fluid applicator (78a) is coupled to the body (18a) and located such that centralisation of the body (18a) within the conduit (14) centralises the fluid applicator (78a) within the conduit.

11. Apparatus (10a) as claimed in any preceding claim, wherein the fluid applicator (78a) is releasably coupled to the body (18a).

12. Apparatus (10a) as claimed in any preceding claim, wherein the fluid applicator (78a) further comprises at least one fluid nozzle (86a) adapted to direct fluid onto the atomiser (166).

13. Apparatus (10a) as claimed in any preceding claim, comprising at least one imaging device (88a) for viewing the inside of the conduit (14).

14. Apparatus (10a) as claimed in claim 13, wherein the imaging device (88a) is connected to the data coupling (24a) for outputting a real-time image of the inside of the conduit (14).

15. Apparatus (10a) as claimed in either of claims 19 or 20, comprising a first imaging device (196) for viewing in a first direction along the conduit (14), and at least one further imaging device (198) for viewing in a second, opposite direction along the conduit (14).

16. Apparatus (10a) as claimed in any preceding claim, comprising at least one light source (90a) for illuminating the conduit (14).

17. Apparatus (10a) as claimed in any preceding claim, comprising an abrasive cleaning tool for cleaning an internal surface of the conduit (14).

18. Apparatus (10a) as claimed in any preceding claim, comprising a self-cleaning assembly (98) for maintaining at least part of the apparatus (10a) clean.

19. Apparatus (10a) as claimed in claim 18, wherein the self-cleaning assembly (98) includes a passage (100) for supplying a cleaning medium to said at least part of the apparatus (10a).

20. Apparatus (10a) as claimed in either of claims 18 or 19, wherein the self-cleaning assembly (98) includes at least one nozzle for directing a jet of cleaning medium onto or near said at least part of the apparatus (10a).

21. Apparatus (10a) as claimed in any preceding claim, wherein the centralisation assembly (16a) is moveable between retracted and extended positions for centralising the body (20a) within the conduit (14).

22. Apparatus (10a) as claimed in claim 21, wherein the centralisation assembly (16a) includes a first set of legs (40',44')movable to an extended position for centralising the body (18a) in a first plane and a second set of legs (42', 46') movable to an extended position for centralising the body (18a) in a second plane.

23. Apparatus (10a) as claimed in any preceding claim, wherein the centralisation assembly (16a) includes sensors (124, 126) for detecting the location of the body (18a) with respect to the conduit (14), and wherein the centralisation assembly (16a) is adapted to adjust the position of the body (18a) to maintain the body (18a) centrally within the conduit (14).

24. Apparatus (10a) as claimed in any one of claims 21 to 23, wherein the apparatus (10a) includes a fail-safe mechanism for de-activating the centralisation assembly (16a) to the retracted position.

25. Apparatus (10a) as claimed in claim 24, wherein the centralisation assembly (16a) is fluid actuated and the fail-safe mechanism includes a valve for bleeding pressure from the centralisation assembly (16a).

26. Apparatus (10a) as claimed in any preceding claim, comprising at least one slider member (62a), for assisting passage of the apparatus (10a) along the conduit (14).

27. Apparatus (10a) as claimed in any preceding claim, comprising a roller device (62) having a plurality of wheels (66) mounted on a plate (64) which is pivotally coupled relative to the centralisation assembly (16a), for assisting passage of the apparatus (10a) along the conduit (14).

28. Apparatus (10a) as claimed in any preceding claim, wherein the body (18a) is self-driven and the transportation assembly (20a) comprises at least one drive wheel (68a).

29. Apparatus (10a) as claimed in any one of claims 1 to 27, wherein the transportation assembly (20a) comprises a cable (24a) coupled to the body (18a) for transporting the body (18a) along the conduit (14).

30. Apparatus (10a) as claimed in any preceding claim, comprising a cable bundle (24) including two or more of an electrical connection (106, 108); a cleaning fluid supply (116); a coating fluid supply (116); a data cable (118); a pneumatic power supply (110, 112, 114); and a hydraulic power supply.

31. Apparatus (10a) as claimed in claim 30, wherein the cable bundle (24) is provided as an umbilical cable including a connector for facilitating quick connection of the bundle (24) to the body (18a).

32. Apparatus (10a) as claimed in any preceding claim, comprising at least one measuring device for measuring at least one internal dimension of the conduit (14).

33. Apparatus (10a) as claimed in claim 32, comprising a potentiometer (124, 126) for providing an electrical signal indicative of a position of the centralisation assembly (16a).

34. Apparatus (10a) as claimed in any preceding claim, comprising at least one of a device for sensing distance travelled by the body (18a); an inclinometer for determining the angle of the body (18a); and a sensor for determining direction of travel of the body (18a).

35. Apparatus (10a) as claimed in any preceding claim, comprising an environmental sampling device for taking an environmental sample inside the conduit (14a).

36. Apparatus (10a) as claimed in any preceding claim comprising a control station (22) coupled to the body (18a) via the data coupling (24a), for controlling operation of the conduit inspection apparatus (10a).

37. A method of inspecting a conduit (14), the method comprising the steps of:
locating a conduit inspection apparatus body (18a) within the conduit (14);
centralising the body within the conduit (14);
coupling the body (18a) to a control station (22) by a data coupling (24a);
moving an atomiser (166) of a fluid applicator (78a) from a deactivated position where the atomiser (166) is stored in an atomiser housing (168) to an activated position; with the atomiser (166) in the activated position, using the atomiser (166) to supply a fluid to the surface of the conduit (14); and
translating the body (18a) along the conduit (14).

38. A method as claimed in claim 37, comprising viewing an image of the inside of the conduit (14) using an imaging device (196, 198).

39. A method as claimed in either of claims 37 or 38, comprising cleaning the conduit (14) by removing any material adhered to an internal wall (74) of the conduit (14).

40. A method as claimed in claim 39, comprising removing material using an abrasive tool.

41. A method as claimed in either of claims 39 or 40, comprising removing material by jetting cleaning fluid onto the internal wall (74) of the conduit (14).

42. A method as claimed in any one of claims 37 to 41, comprising applying a time-setting coating fluid to an internal surface (74) of the conduit (14).

43. A method as claimed in either of claims 41 or 42, comprising supplying the fluid to the atomiser (166), the atomiser (166) imparting a force on the fluid to direct the fluid towards the internal wall (74) of the conduit (14).

## Patentansprüche

1. Eine Leitungsprüfungsmaschine (10a), die Folgendes umfasst:
ein Hauptteil (18a), das in eine Leitung (14) eingeführt werden kann;
eine Zentrierungsvorrichtung (16a), mit der das Hauptteil (18a) in der Leitung (14) zentriert werden kann;
eine Transportvorrichtung (20a), mit der das Hauptteil (18a) durch die Leitung (14) transportiert werden kann;
eine Datenkupplung (24a) für die Datenübertragung zwischen dem Hauptteil (18a)
und der Kontrollstation (22); und
einen Flüssigkeitsapplikator (78a), mit dem eine Flüssigkeit auf eine Oberfläche (74) der Leitung (14) aufgetragen werden kann.
Dabei verfügt der Flüssigkeitsapplikator (78a) über einen Zerstäuber (166), der zwischen einer deaktivierten Position und einer aktivierten Position wechseln kann, wobei der Zerstäuber (166) in der aktivierten Position dazu dient, Flüssigkeit auf die Oberfläche (74) der Leitung (14) aufzutragen; weiterhin umfasst die Maschine ein Gehäuse (168), in dem der Zerstäuber (166) untergebracht werden kann, wenn er sich in der deaktivierten Position befindet.

2. Eine Maschine (10a) wie in Anspruch 1 beschrieben, wobei der Zerstäuber (166) dazu dient, auf die Flüssigkeit eine Kraft auszuüben, damit diese in Richtung einer Oberfläche der Leitung (14) geleitet wird.

3. Eine Maschine (10a) wie in Anspruch 2 beschrieben, wobei der Zerstäuber (166) eine Hauptscheibe (178) hat, mit der eine Kraft auf die Flüssigkeit ausgeübt wird.

4. Eine Maschine (10a) wie in Anspruch 3 beschrieben, wobei der Zerstäuber (166) eine zweite Schildscheibe (190) umfasst, die mit einem gewissen Abstand von der Hauptscheibe (178) an einer Achse (192) des Zerstäubers (166) angebracht ist, und die dazu dient zu verhindern, dass an der Achse (192) des Zerstäubers Flüssigkeit entweichen kann.

5. Eine Maschine (10a) wie in den vorgenannten Ansprüchen beschrieben, wobei der Zerstäuber (166) in Richtung der deaktivierten Position ausgerichtet ist.

6. Eine Maschine (10a) wie in den vorgenannten Ansprüchen beschrieben, wobei der Zerstäuber (166) wahlweise in Richtung der aktivierten Position getrieben wird.

7. Eine Maschine (10a) wie in Anspruch 6 beschrieben, wobei die Maschine mindestens einen Kolben (172) umfasst, mit dem der Zerstäuber (166) in die aktivierte Position getrieben wird.

8. Eine Maschine (10a) wie in Anspruch 6 oder 7 beschrieben, wobei die Maschine so angeordnet ist, dass der Zerstäuber (166) nur dann in die aktivierte Position getrieben wird, wenn er rotiert.

9. Eine Maschine (10a) wie in Anspruch 8 beschrieben, wenn dieser sich auf Anspruch 7 bezieht, wobei dann der Flüssigkeitsapplikator (78a) einen Motor (170) hat, der den Zerstäuber (166) rotieren lässt, und wobei der Kolben (172) so angeordnet ist, dass der Zerstäuber (166) in die aktivierte Position getrieben wird, wenn der Motor (170) aktiviert ist.

10. Eine Maschine (10a) wie in den vorgenannten Ansprüchen beschrieben, wobei der Flüssigkeitsapplikator (78a) mit dem Hauptteil (18a) gekoppelt und so platziert ist, dass die Zentrierung des Hauptteils (18a) in der Leitung (14) den Flüssigkeitsapplikator (78a) in der Leitung (14) zentriert ausrichtet.

11. Eine Maschine (10a) wie in den vorgenannten Ansprüchen beschrieben, wobei der Flüssigkeitsapplikator (78a) lösbar mit dem Hauptteil (18a) gekoppelt ist.

12. Eine Maschine (10a) wie in den vorgenannten Ansprüchen beschrieben, wobei der Flüssigkeitsapplikator (78a) weiterhin mindestens eine Flüssigkeitsdüse (86a) umfasst, mit der die Flüssigkeit in Richtung des Zerstäubers (166) gelenkt wird.

13. Eine Maschine (10a) wie in den vorgenannten Ansprüchen beschrieben, die mindestens eine Bildgebungsvorrichtung (88a) umfasst, mit der das Innere der Leitung (14) eingesehen werden kann.

14. Eine Maschine (10a) wie in Anspruch 13 beschrieben, wobei die Bildgebungsvorrichtung (88a) mit der Datenkupplung (24a) verbunden ist, damit das Bild des Inneren der Leitung (14) in Echtzeit gegeben werden kann.

15. Eine Maschine (10a) wie in Anspruch 19 oder 20 beschrieben, zu der eine erste Bildgebungsvorrichtung (196) gehört, mit Hilfe derer ein Bild einer ersten Richtung entlang der Leitung (14) gesehen werden kann, und mindestens eine weitere Bildgebungsvorrichtung (198), mit der in eine zweite entgegen gesetzte Richtung entlang der Leitung (14) gesehen werden kann.

16. Eine Maschine (10a) wie in den vorgenannten Ansprüchen beschrieben, die mindestens eine Lichtquelle (90a) umfasst, mit der die Leitung (14) beleuchtet wird.

17. Eine Maschine (10a) wie in den vorgenannten Ansprüchen beschrieben, die ein Schleifgerät umfasst, mit dem die innere Oberfläche der Leitung (14) gereinigt werden kann.

18. Eine Maschine (10a) wie in den vorgenannten Ansprüchen beschrieben, die eine Vorrichtung zur Selbstreinigung (98) umfasst, mit der zumindest ein Teil der Maschine (10a) sauber gehalten werden kann.

19. Eine Maschine (10a) wie in Anspruch 18 beschrieben, wobei die Vorrichtung zur Selbstreinigung (98) einen Durchlauf (100) hat, durch den zumindest auf einen Teil der Maschine (10a) ein Reinigungsmittel aufgetragen werden kann.

20. Eine Maschine (10a) wie in Anspruch 18 oder 19 beschrieben, wobei die Vorrichtung zur Selbstreinigung (98) über mindestens eine Düse verfügt, die einen Strahl des Reinigungsmittels auf einen Teil oder in die Nähe eines Teils der Maschine (10a) richtet.

21. Eine Maschine (10a) wie in den vorgenannten Ansprüchen beschrieben, wobei die Zentrierungsvorrichtung (16a) zwischen der eingezogenen und der ausgefahrenen Position bewegt werden kann, damit das Hauptteil (20a) in der Leitung (14) zentriert werden kann.

22. Eine Maschine (10a) wie in Anspruch 21 beschrieben, wobei die Zentrierungsvorrichtung (16a) einen ersten Satz Schenkel (40', 44') umfasst, die ausgefahren werden können, damit das Hauptteil (18a) in einer ersten Ebene zentriert werden kann, und einen zweiten Satz Schenkel (42', 46'), die ausgefahren werden können, um das Hauptteil (18a) in einer zweiten Ebene zentral auszurichten.

23. Eine Maschine (10a) wie in den vorgenannten Ansprüchen beschrieben, wobei die Zentrierungsvorrichtung (16a) Sensoren (124, 126) hat, mit der die Position des Hauptteils (18a) in der Leitung (14) bestimmt werden kann, und wobei die Zentrierungsvorrichtung (16a) die Position des Hauptteils (18a) anpassen kann, damit das Hauptteil (18a) in der Leitung (14) zentral ausgerichtet bleibt.

24. Eine Maschine (10a) wie in einem der Ansprüche 21 bis 23 beschrieben, wobei die Maschine (10a) einen betriebssicheren Mechanismus zur Deaktivierung der Zentrierungsvorrichtung (16a) in die eingezogene Position umfasst.

25. Eine Maschine (10a) wie in Anspruch 24 beschrieben, wobei die Zentrierungsvorrichtung (16a) von Flüssigkeit angetrieben wird und der betriebssichere Mechanismus ein Ventil umfasst, mit dem Druck aus der Zentrierungsvorrichtung (16a) abgelassen werden kann.

26. Eine Maschine (10a) wie in den vorgenannten Ansprüchen beschrieben, die mindestens ein Schiebeglied (62a) umfasst, das das Gleiten der Maschine (10a) in der Leitung (14) unterstützen soll.

27. Eine Maschine (10a) wie in den vorgenannten Ansprüchen beschrieben, die eine Rollvorrichtung (62) mit mehreren Rädern (66) umfasst, die auf einer Platte (64) angebracht ist, die in Bezug auf die Zentrierungsvorrichtung (16a) zentral gekoppelt ist und die das Gleiten der Maschine (10a) in der Leitung (14) unterstützen soll.

28. Eine Maschine (10a) wie in den vorgenannten Ansprüchen beschrieben, wobei das Hauptteil (18a) einen Eigenantrieb hat und die Transportvorrichtung (20a) mindestens ein Antriebsrad (68a) hat.

29. Eine Maschine (10a) wie in einem der Ansprüche 1 bis 27 beschrieben, wobei die Transportvorrichtung (20a) ein Kabel (24a) umfasst, das mit dem Hauptteil (18a) verbunden ist, um das Hauptteil (18a) in der Leitung (14) zu transportieren.

30. Eine Maschine (10a) wie in den vorgenannten Ansprüchen beschrieben mit einem Kabelbündel (24) mit zwei oder mehreren elektrischen Anschlüssen (106, 108), einem Zulauf für Reinigungsflüssigkeit (116), einem Zulauf für Beschichtungsflüssigkeit (116), einem Datenkabel (118), einem Zulauf für Luftdruck (110, 112, 114) und einem Zulauf für hydraulischen Druck.

31. Eine Maschine (10a) wie in Anspruch 30 beschrieben, wobei das Kabelbündel (24) ein Versorgungskabel mit einem Anschlussstück ist, damit der schnelle Anschluss des Bündels (24) an das Hauptteil (18a) erleichtert wird.

32. Eine Maschine (10a) wie in den vorgenannten Ansprüchen beschrieben, die mindestens eine Messvorrichtung umfasst, mit der mindestens eine innere Abmessung der Leitung (14) vorgenommen werden kann.

33. Eine Maschine (10a) wie in Anspruch 32 beschrieben, die ein Potentiometer (124, 126) umfasst, das ein elektrisches Signal aussendet, welches die Position der Zentrierungsvorrichtung (16a) anzeigt.

34. Eine Maschine (10a) wie in den vorgenannten Ansprüchen beschrieben, die mindestens eine der Vorrichtungen umfasst, mit der die vom Hauptteil (18a) zurückgelegte Distanz gemessen werden kann, außerdem einen Neigungsmesser, mit dem der Winkel des Hauptteils (18a) bestimmt werden kann und einen Sensor zur Bestimmung der Bewegungsrichtung des Hauptteils (18a).

35. Eine Maschine (10a) wie in den vorgenannten Ansprüchen beschrieben, die eine Vorrichtung zur Entnahme von Umweltproben umfasst, mit der in der Leitung (14) Umweltproben entnommen werden können.

36. Eine Maschine (10a) wie in den vorgenannten Ansprüchen beschrieben, die eine Kontrollstation (22) umfasst, die über die Datenkupplung (24a) an das Hauptteil (18a) angeschlossen ist und mit der der Betrieb der Leitungsprüfmaschine (10a) gesteuert werden kann.

37. Eine Methode eine Leitung (14) zu prüfen, wobei die Methode aus folgenden Schritten besteht:
ein Hauptteil (18a) einer Leitungsprüfungsmaschine in der Leitung (14) einzubringen;
das Hauptteil in der Leitung (14) zu zentrieren;
das Hauptteil (18a) durch eine Datenkupplung (24a) an eine Kontrollstation (22) anzuschließen;
einen Zerstäuber (166) eines Flüssigkeitsapplikators (78a) von einer deaktivierten Position, in der der Zerstäuber (166) in einem Zerstäubergehäuse (168) untergebracht ist, in eine aktivierte Position zu bringen;
den Zerstäuber (166) in der aktivierten Position dazu zu nutzen, eine Flüssigkeit auf die Oberfläche der Leitung (14) aufzutragen; und
das Hauptteil (18a) durch die Leitung (14) hindurch zu führen.

38. Eine Methode wie in Anspruch 37 beschrieben, zu der gehört, dass mit Hilfe einer Bildgebungsvorrichtung (196, 198) ein Bild vom Inneren der Leitung (14) angesehen werden kann.

39. Eine Methode wie in Anspruch 37 oder 38 beschrieben, die die Reinigung der Leitung (14) umfasst, bei der jegliches Material, das an einer inneren Wand (74) der Leitung (14) haftet, entfernt wird.

40. Eine Methode wie in Anspruch 39 beschrieben, die auch die Beseitigung von Material mit einer Schleifvorrichtung umfasst.

41. Eine Methode wie in Anspruch 39 oder 40 beschrieben, zu der die Beseitigung von Material durch Spritzen einer Reinigungsflüssigkeit an die innere Wand (74) der Leitung (14) gehört.

42. Eine Methode wie in den Ansprüchen 37 bis 41 beschrieben, die umfasst, dass eine Beschichtungsflüssigkeit, die mit der Zeit wirkt, auf eine innere Fläche (74) der Leitung (14) aufgetragen wird.

43. Eine Methode wie in Anspruch 41 oder 42 beschrieben, zu der gehört, dass die Flüssigkeit zum Zerstäuber (166) geführt wird, und der Zerstäuber (166) dann eine Kraft auf die Flüssigkeit ausübt, so dass die Flüssigkeit in Richtung der inneren Wand (74) der Leitung (14) gelenkt wird.

## Revendications

1. Appareil d'inspection de conduit (10a) comprenant :
un corps (18a) adapté pour être placé à l'intérieur d'un conduit (14);
un ensemble de centrage (16a) pour centrer le corps (18a) à l'intérieur du conduit (14);
un ensemble de transport (20a) pour transporter le corps (18a) le long du conduit (14);
un couplage de données (24a) pour la communication de données entre le corps (18a) et une station de commande (22) ; et
un applicateur de liquide (78a) pour fournir un liquide à une surface (74) du conduit (14) ;
**caractérisé en ce que** l'applicateur de liquide (78a) comprend un pulvérisateur (166) qui peut être déplacé entre une position désactivée et une position activée, dans la position activée, le pulvérisateur (166) servant à fournir le liquide à la surface (74) du conduit (14) ; et **en ce que** l'appareil comprend en outre un logement (168) pour ranger le pulvérisateur (166) lorsqu'il est en position désactivée.

2. Appareil (10a) selon la revendication 1, dans lequel le pulvérisateur (166) sert à exercer une force sur le liquide pour diriger le liquide vers une surface du conduit (14).

3. Appareil (10a) selon la revendication 2, dans lequel le pulvérisateur (166) a un disque principal (178) pour exercer une force sur le liquide.

4. Appareil (10a) selon la revendication 3, dans lequel le pulvérisateur (166) comprend un disque de protection secondaire (190) espacé du disque principal (178) le long d'un arbre (192) du pulvérisateur (166), le disque secondaire (190) servant à empêcher le passage de liquide le long de l'arbre du pulvérisateur (192).

5. Appareil (10a) selon l'une quelconque des revendications précédentes, dans lequel le pulvérisateur (166) est rappelé vers la position désactivée.

6. Appareil (10a) selon l'une quelconque des revendications précédentes, dans lequel le pulvérisateur (166) est sélectivement poussé vers la position activée.

7. Appareil (10a) selon la revendication 6, ledit appareil comprenant au moins un piston (172) pour pousser le pulvérisateur (166) à la position activée

8. Appareil (10a) selon la revendication 6 ou 7, ledit appareil étant agencé de telle sorte que le pulvérisateur (166) est uniquement poussé vers la position activée quand il est tourné.

9. Appareil (10a) selon la revendication 8, lorsqu'elle dépend de la revendication 7, dans lequel l'applicateur de liquide (78a) comprend un moteur (170) assurant la rotation du pulvérisateur (166), et dans lequel le piston (172) est agencé de manière à pousser le pulvérisateur (166) vers la position activée quand le moteur (170) est activé.

10. Appareil (10a) selon l'une quelconque des revendications précédentes, dans lequel l'applicateur de liquide (78a) est couplé au corps (18a) et positionné de telle sorte que le centrage du corps (18a) à l'intérieur du conduit (14) centre l'applicateur de liquide (78a) à l'intérieur du conduit.

11. Appareil (10a) selon l'une quelconque des revendications précédentes, dans lequel l'applicateur de liquide (78a) est couplé au corps (18a) d'une manière permettant sa libération.

12. Appareil (10a) selon l'une quelconque des revendications précédentes, dans lequel l'applicateur de liquide (78a) comprend en outre au moins une buse à liquide (86a) adaptée pour diriger le liquide sur le pulvérisateur (166).

13. Appareil (10a) selon l'une quelconque des revendications précédentes, comprenant au moins un système imageur (88a) pour visualiser l'intérieur du conduit (14).

14. Appareil (10a) selon la revendication 13, dans lequel le système imageur (88a) est connecté au couplage de donnée (24a) pour produire une image en temps réel de l'intérieur du conduit (14).

15. Appareil (10a) selon la revendication 19 ou 20, comprenant un premier système imageur (196) pour visualiser dans une première direction le long du conduit (14), et au moins un autre système imageur (198) pour visualiser dans une seconde direction opposée le long du conduit (14).

16. Appareil (10a) selon l'une quelconque des revendications précédentes, comprenant au moins une source de lumière (90a) pour éclairer le conduit (14).

17. Appareil (10a) selon l'une quelconque des revendications précédentes, comprenant un outil de nettoyage abrasif pour nettoyer la surface interne du conduit (14).

18. Appareil (10a) selon l'une quelconque des revendications précédentes, comprenant un ensemble auto-nettoyant (98) pour maintenir propre au moins une partie de l'appareil (10a).

19. Appareil (10a) selon la revendication 18, dans lequel l'ensemble auto-nettoyant (98) comprend un passage (100) pour fournir un agent de nettoyage à ladite partie de l'appareil (10a).

20. Appareil (10a) selon la revendication 18 ou 19, dans lequel l'ensemble auto-nettoyant (98) comprend au moins une buse pour diriger un jet d'agent nettoyant sur ou près de ladite partie de l'appareil (10a).

21. Appareil (10a) selon l'une quelconque des revendications précédentes, dans lequel l'ensemble de centrage (16a) peut se déplacer entre les positions rétractée et déployée pour centrer le corps (20a) à l'intérieur du conduit (14).

22. Appareil (10a) selon la revendication 21, dans lequel l'ensemble de centrage (16a) comprend une première jambe (40', 44') pouvant être déplacée en position déployée pour centrer le corps (18a) dans un premier plan et une seconde jambe (42', 46') pouvant être déplacée en position déployée pour centrer le corps (18a) dans un second plan.

23. Appareil (10a) selon l'une quelconque des revendications précédentes, dans lequel l'ensemble de centrage (16a) comprend des capteurs (124, 126) pour détecter la position du corps (18a) par rapport au conduit (14), et dans lequel l'ensemble de centrage (16a) est adapté pour ajuster la position du corps (18a) pour maintenir le corps (18a) centré à l'intérieur du conduit (14).

24. Appareil (10a) selon l'une quelconque des revendications 21 à 23, ledit appareil (10a) comprenant un mécanisme à sûreté intégrée pour désactiver l'ensemble de centrage (16a) à la position rétractée.

25. Appareil (10a) selon la revendication 24, dans lequel l'ensemble de centrage (16a) est actionné par liquide et le mécanisme à sûreté intégrée comprend un clapet pour purger la pression de l'ensemble de centrage (16a).

26. Appareil (10a) selon l'une quelconque des revendications précédentes, comprenant au moins un élément coulissant (62a) pour faciliter le passage de l'appareil (10a) le long du conduit (14).

27. Appareil (10a) selon l'une quelconque des revendications précédentes, comprenant un dispositif de roulement (62) ayant une pluralité de roues (66) monté sur une plaque (64) qui est couplée de manière pivotante par rapport à l'ensemble de centrage (16a), pour faciliter le passage de l'appareil (10a) le long du conduit (14).

28. Appareil (10a) selon l'une quelconque des revendications précédentes, dans lequel le corps (18a) est auto-moteur et l'ensemble de transport (20a) comprend au moins une roue motrice (68a).

29. Appareil (10a) selon l'une quelconque des revendications 1 à 27, dans lequel l'ensemble de transport (20a) comprend un câble (24a) couplé au corps (18a) pour transporter le corps (18a) le long du conduit (14).

30. Appareil (10a) selon l'une quelconque des revendications précédentes, englobant un faisceau de câbles (24) comprenant deux connexions électriques ou plus (106, 108) ; une alimentation en liquide nettoyant (116) ; une alimentation en liquide de revêtement (116) ; un câble de données (118) ; une alimentation pneumatique (110, 112, 114) ; et une alimentation hydraulique.

31. Appareil (10a) selon la revendication 30, dans lequel le faisceau de câbles (24) est prévu comme liaison ombilicale comprenant un connecteur pour faciliter la connexion rapide du faisceau (24) au corps (18a).

32. Appareil (10a) selon l'une quelconque des revendications précédentes, comprenant au moins un dispositif de mesure pour mesurer au moins une dimension interne du conduit (14).

33. Appareil (10a) selon la revendication 32, comprenant un potentiomètre (124, 126) pour fournir un signal électrique indiquant une position de l'ensemble de centrage (16a).

34. Appareil (10a) selon l'une quelconque des revendications précédentes, comprenant au moins un dispositif de détection de la distance parcourue par le corps (18a) ; un inclinomètre pour déterminer l'angle du corps (18a) ; et un capteur pour déterminer la direction de déplacement du corps (18a).

35. Appareil (10a) selon l'une quelconque des revendications précédentes, comprenant un dispositif d'échantillonnage d'ambiance pour prélever un échantillon de milieu à l'intérieur conduit (14).

36. Appareil (10a) selon l'une quelconque des revendications précédentes, comprenant une station de commande (22) couplée au corps (18a) par le couplage de données (24a), pour commander le fonctionnement de l'appareil d'inspection de conduit (10a).

37. Procédé d'inspection d'un conduit (14), ledit procédé comprenant les étapes consistant à :
positionner le corps d'un appareil d'inspection de conduit (18a) à l'intérieur du conduit (14);
centrer le corps à l'intérieur du conduit (14);
coupler le corps (18a) à la station de commande (22) par un couplage de données (24a);
déplacer un pulvérisateur (166) d'un applicateur de liquide (78a) d'une position désactivée à laquelle le pulvérisateur (166) est rangé dans un logement de pulvérisateur (168) à une position activée ;
le pulvérisateur (166) étant en position activée, utiliser le pulvérisateur (166) pour fournir un liquide à la surface du conduit (14) ; et
déplacer le corps (18a) le long du conduit (14).

38. Procédé selon la revendication 37, consistant à visualiser une image de l'intérieur du conduit (14) grâce à un système imageur (196, 198).

39. Procédé selon la revendication 37 ou 38, comprenant le nettoyage du conduit (14) par élimination du matériau collé à une paroi interne (74) du conduit (14).

40. Procédé selon la revendication 39, comprenant l'élimination du matériau à l'aide d'un outil abrasif.

41. Procédé selon la revendication 39 ou 40, comprenant l'élimination du matériau par un jet de liquide nettoyant sur la paroi interne (74) du conduit (14).

42. Procédé selon l'une quelconque des revendications 37 à 41, comprenant l'application d'un liquide de revêtement à prise progressive sur une surface interne (74) du conduit (14).

43. Procédé selon la revendication 41 ou 42, comprenant la fourniture du liquide au pulvérisateur (166), ledit pulvérisateur (166) exerçant une force sur le liquide pour diriger le liquide vers la paroi interne (74) du conduit (14).
